# EUROPEAN PATENT APPLICATION

(11) **EP 1 492 080 A1**
(43) Date of publication of application: **29.12.2004**
(21) Application number: 03743039.4
(22) Date of filing: 26.02.2003
(51) Int. Cl.: G10H 1/00, G10K 15/02, G06F 17/60

(54) **MUSIC PROVIDING METHOD AND SYSTEM, AND MUSIC CREATION SYSTEM**

(30) Priority: 28.02.2002 JP 2002053458
(71) Applicant: Sano, Yoshihiko, Tojyo-cho, Kato-gun, Hyogo 673-1302 (JP)
(72) Inventor: Sano, Yoshihiko, Tojyo-cho, Kato-gun, Hyogo 673-1302 (JP)
(74) Representative: Beresford, Keith Denis Lewis
(86) International application number: PCT/JP2003/002156
(87) International publication number: WO 2003/073414

(57) **Abstract**

The present invention aims at providing a high-quality music full of originality efficiently in a short period of time and at a relatively low cost.

Subsequent to authentication being effected to a user, an ordering program 110 is executed in a MA server 100, so that an order window image is transmitted to the user. In a test-listening phase, the user can search for and listen to desired music material(s) by inputting parameters to be searched. In a phase for setting parameters, an image of order sheet is indicated on the screen, in which desired values may be inputted, or selection may be made from a pull-down menu. On the side of the MA server 100, an operator of DAW makes reference to an order data 114 and uses material data 202, thereby executing an editing process according to an order placed by the user. A data of a finally produced music is transmitted from a DAW 200 to the MA server 100. In the MA server 100, a delivery program 112 is executed to transmit a delivery data 116 to a user's PC 150 together with an accounting data.

## Description

### [Field of the Invention]

The present invention relates to a method for providing music, a system for effecting such method, and a system for producing music. For instance, the invention relates to a method for providing music, by which music is provided to multi-audio creators who produce comprehensive audio tracks by using a large number of materials for the music (including SE (sound effect) and/or narration), and also relates to a system for effecting such method as well as to a system for producing the music.

### [Background Arts]

In recent years, a music has played an increasingly important role in video or image works to the degree that one can safely say that no image work exist without music. Conventionally, it had been customary for a composer to provide his or her original music to an image work, but, nowadays, a rapidly increasing number of multi-audio ("MA" for short) creators have actually employed copyright-free sound sources or existing sound sources (hereinafter, referred to as "copyright-free sound sources and so forth"), resulting in a sudden reduction of request of music composition to a particular composer. In other words, the copyright-free sound sources and so forth have been used in such a way that a desired tune(s), a desired effective sound(s), and a desired narration are selected therefrom and edited, and then mixed (or combined) with image work(s).

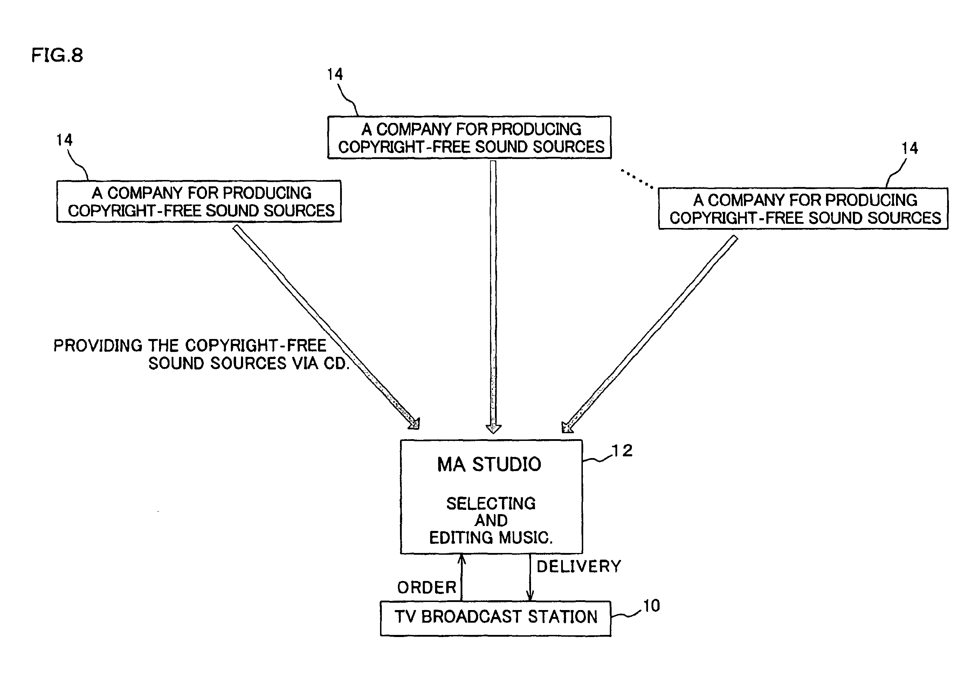

Such procedures are shown in Fig. 8, wherein, by way of example, a TV broadcast station 10 places an order with a MA studio 12 for a MA product designed for a TV program. As shown, copyright-free sound sources are provided to the MA studio 12, as by CD medium, from a plurality of companies who produce copyright free sound sources. The MA studio 12 uses the copyright free sound sources and executes required processes to select and edit desired tunes and effective sounds with regard to an image ordered, then combine a resulting music with the image, and delivers a final product to the TV broadcast station 10. This is an example of the case where the copyright-free sound sources are used, but, other existing kinds of sound sources may be used for that purpose.

The reasons behind the foregoing use of copyright-free sound sources and so forth are deemed to be based on the following factors:
(1) Costs···Costs and expenses will increase in the case of requesting a composer to compose music, which will become higher than the case where the copyright-free sound sources and so forth are used.
(2) Time and labor required to request music composition···Due to the tendency to reduce a time for producing an image work, it is impossible to have a time to confer with people about producing music. But, in the case of requesting a composer to compose music, a considerable period of time will be needed in order to arrange a conference among people concerned, compose a proper music, and make a recording of the composed music.
(3) Prior checking···Before a composer completes recording of his or her composed piece of music, there is no way for the details of the composed music piece to be checked out by a client asking the composer for the music composition. Hence, the more importantly a role of the requested piece of music is played in a whole of the client's work, the higher a possibility of risk will be increased on the client's part.
(4) Satisfying availability of the copyright free sound sources and so forth··· Supply of sound sources via CD mediums, periodical change of contents involved therein, release of orchestra sounds recorded abroad, and other music production ways have realized a satisfying sound quality and composition of the copyright free sound sources and so forth which had been meager in the past.
(5) Prevalence of DAW···In using the copyright free sound sources and so forth, it is inevitably necessary to undergo the step of editing the music materials. However, such editing process now becomes easier to effect by use of such DAW (Digital Audio Workstation) as "ProTools" (Digidesign) or "NUENDO"(Steinberg).

Nonetheless, in the above-stated background-art state for effecting the MA creation process using the copyright-free sound sources and so forth, there has been the following problems: a uniformity is not attainable in the created sound; many fade-out and/or cut-out processes are inevitably required; a discontinuity causes in flow of the music sound; and the resulting piece of music has a low originality, as a result of which, a creator or stage director who desires a high quality of music will find himself or herself compelled to accept a lot of undesirable aspects.

The present invention takes the foregoing points into consideration and aims at providing a method for providing music, a system for effecting the same, and a system for producing music, which are not only relatively low in costs, but also permit for efficiently providing a high quality of music and/or sound full of originality in a short period of time.

### [Disclosure of the Invention]

In order to achieve the above-stated aim, a process for producing music in accordance with the present invention, which uses a great number of material data n provided beforehand from the side of a sever in a multi-track form, is characterized by including: a step of receiving an order from a user through a network; a step of subjecting the said material data to required processing by means of DAW according to details of the said order; and a step of providing said user with a music which has been produced by and subsequent to the said required processing.

A system for producing music in accordance with the present invention, by which the music is produced according to details of an order received from a user through a network and then provided to the user, is characterized by being provided with: a great number of material data in a multi-track form; an ordering means for allowing for setting parameters and placing an order; and a delivery means for delivering to the user a resulting music which has been produced, and also characterized in that the music is produced by using the material data according to the detail of the order placed by the ordering means.

According to a major embodiment of the present invention, the afore-stated system for producing music is characterized by at least comprising: a test-listening means for allowing the foregoing material data to be test listened; an authentication means for executing authentication processing to the user; and an accounting means for executing accounting processing with respect to services given to the said user. In another embodiment of the invention, the system is characterized in that the music, which is to be produced by using the material data according to the details of order placed by the ordering means, is produced by use of DAW. One mode of the DAW is characterized by including automatic processing means for automatically producing the music which is to be produced by using the material data according to the detail of order. Still another embodiment of the invention is characterized in that the foregoing ordering means allows nontechnical term associated with the music to be used in order to set said detail of said order.

In addition, the present invention is characterized in that the system for producing music and a lager number of user's terminals are connected to a network. It should be noted that the foregoing and another purposes, features, and advantages will become more specifically apparent from the detailed description hereinafter with reference to the annexed drawings.

### [Brief Description of the Drawings]

Fig. 1 is a block diagram for showing one embodiment of system architecture in accordance with the present invention.
Fig. 2 is a diagram for explanatorily showing parameters for ordering procedure.
Fig. 3 is a diagram for explanatorily showing a processing under each of multi-track system and two-track mixing system.
Fig. 4 is a diagram for explanatorily showing one example of processing for MA by means of DAW.
Fig. 5 is a sequence diagram showing operation of the foregoing embodiment.
Fig. 6 is a diagram for explanatorily showing images appearing on the screen of user's PC.
Fig. 7 is a diagram for explanatorily showing one example of adding music pieces to the respective images.
Fig. 8 is a block diagram for showing a conventional system for producing music.

### [Best Embodiment for Carrying Out the Invention]

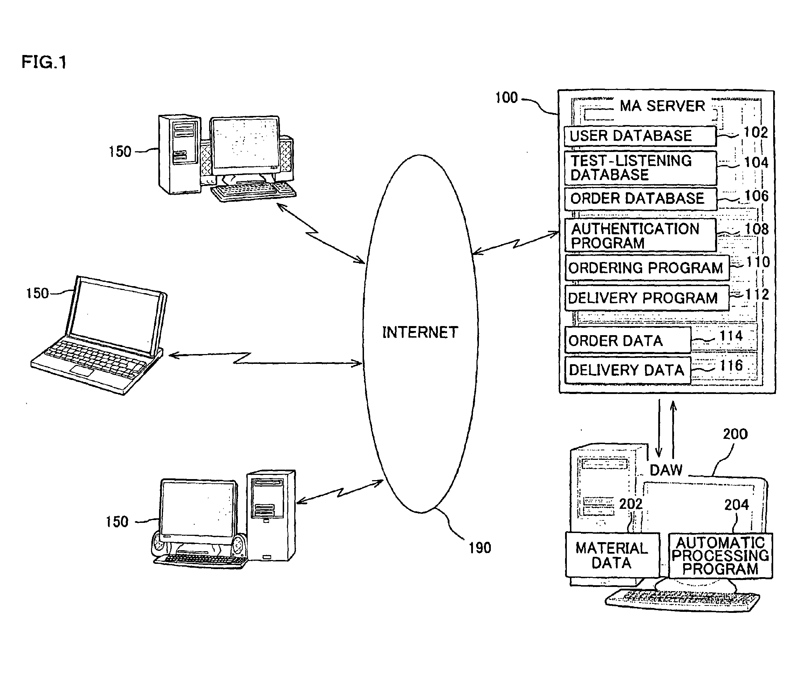

<Construction of one embodiment>···Hereinafter, one exemplary embodiment of the present invention will be specifically described. Fig. 1 illustrates a whole of arrangement of a system for wire distributing MA works (i.e. an on-demand composer). As shown in that figure, the present system is so constructed as to have a MA server 100 as a central unit, the MA server being connected with an Internet 190 and also connected with a PC (i.e. a personal computer) owned by a user who will place an order with the MA server. It is noted that providers and other many servers are omitted.

Among those elements, at first, a description will be made of the MA server 100. This MA server 100 is provided with:
(1) a user database 102 in which are accumulated in storage a data concerning users who receive services to be provided by the present system;
(2) a test-listening database 104 which allows sample tunes to be test listened;
(3) an order database 106 in which parameters to be set for ordering are accumulated in storage;
(4) an authentication program 108 for causing reference to the afore-said user database 102 and thereby executing authentication of a user(s) found therein.
(5) an ordering program 110 for causing reference to the afore-said test-listening database 104 and/or order database 106, and enabling search for parameters for ordering, and/or enabling selection of particular one or more of the parameters; and
(6) a delivery program 112 for allowing a resulting musical composition(s) to be delivered to the user, while simultaneously executing accounting processing by referencing the afore-said user database 102.

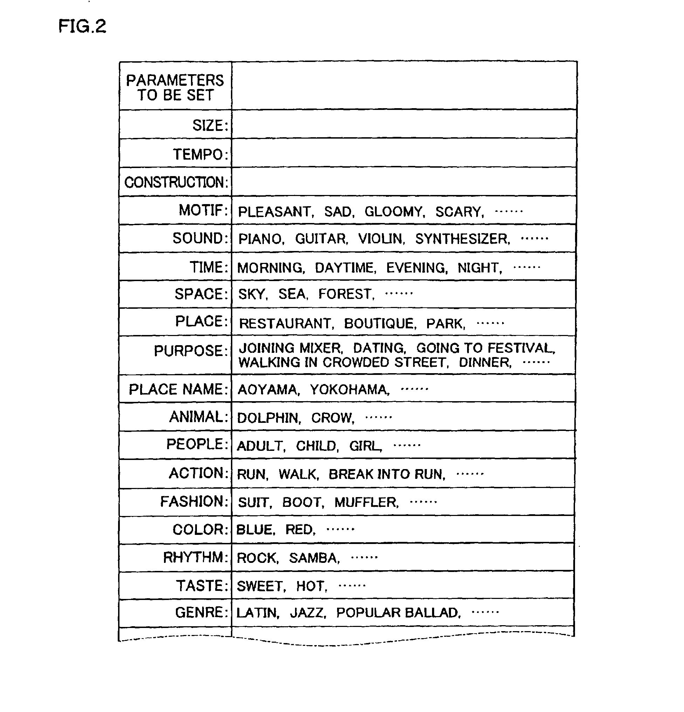

Among those elements, the test-listening database 104 is adapted for allowing the user to test listen to some of typical music materials that have been collected and stored therein, thereby enabling the user to order one or more pieces of the music materials to which he or she has test listened. The order database 106 is a database having parameters to be set or selected by the user. As shown in Fig. 2 by way of one example, the parameters, which are to be set by the user when ordering, may include: "size", "tempo", "construction", "motif", "sound", etc. ···. In this respect, for instance, the "size" of an intended musical composition may be set by a time, say, 5 minutes. And, the construction of the musical composition may be expressed by phrases which may for example consist of A, B, C ···, in which case, sequencing the phrases may be programmed such that "A - A - B - A". Next, in the case of the "motif', for example, one or more of the following categories may be selected: "pleasant", "sad", "gloomy", "scary", and etc. ···. Likewise, in the case of the "space", one or more of the following categories be selected: "sky", "sea", "forest", and etc. ···. With regard to other parameters shown, the same manner of selection as above may be made. Of course, those setting procedures are just one example, and therefore, any of the shown parameters be set as desired and appropriately.

The ordering program 110 is a program for causing reference to the aforementioned order database 106 and causing sequential indication on screen of the following guidance: search, designation, selection, and input, in given parameters for ordering, so as to obtain and store the details of parameters by which the user has placed an order, as an order data 114. The delivery program 112 is a program for causing a data of a finally produced musical composition to transform into a proper form that can be downloaded by the user, or allowing such data to be recorded on a CD-ROM medium, depending on a size of the data, and then delivering it to the user. This delivery program is also capable of calculating charges involved.

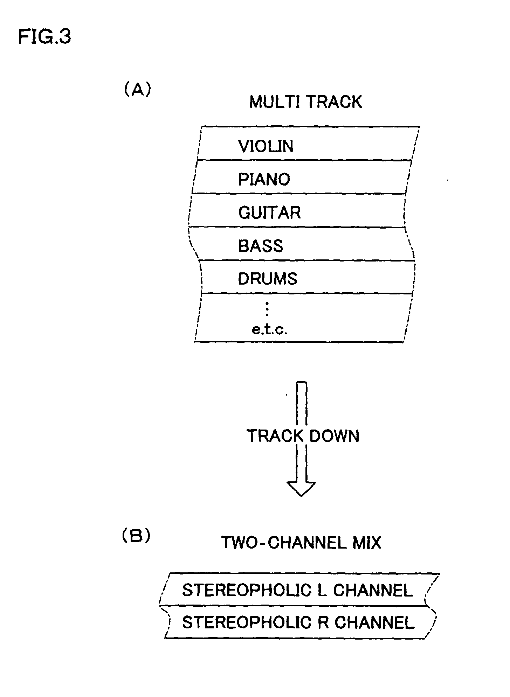

Next, turning back to Fig. 1, the DAW (Digital Audio Workstation) 200 is connected with the MA server 100. In the present embodiment, a great number of material data 202 for music materials are stored in memory in the form of both two-channel mix and multi track. By means of the multi track, it is possible to pick out and/or edit each of musical instrument parts. With regard to the afore-stated copyright-free sound sources and so forth, they are stored in the form of the two-channel mix. Those processing are illustrated in Fig. 3. In the case of the multi track form, as shown in the (A) of that Fig. 3 for example, the instrumental parts, such as violin, piano, guitar, bass, drums, etc. ···, are separately recorded on their respective audio tracks. Thus, a particular one or more of those sound parts may be extracted solely therefrom and subjected to various steps of processing by means of the DAW 200. By contrast, the two-channel mix relates to recording of the musical parts that have been mixed down or tracked down from among the musical parts shown in the (A) of the said Fig. 3, and, according thereto, as shown in the (B) of such Fig. 3, the thus-tracked-down parts are mixed together into L channel and R channel in stereophonic way, which are recorded on their respective two audio tracks. Hence, it is no longer possible to alter the recorded contents of resulting piece of music.

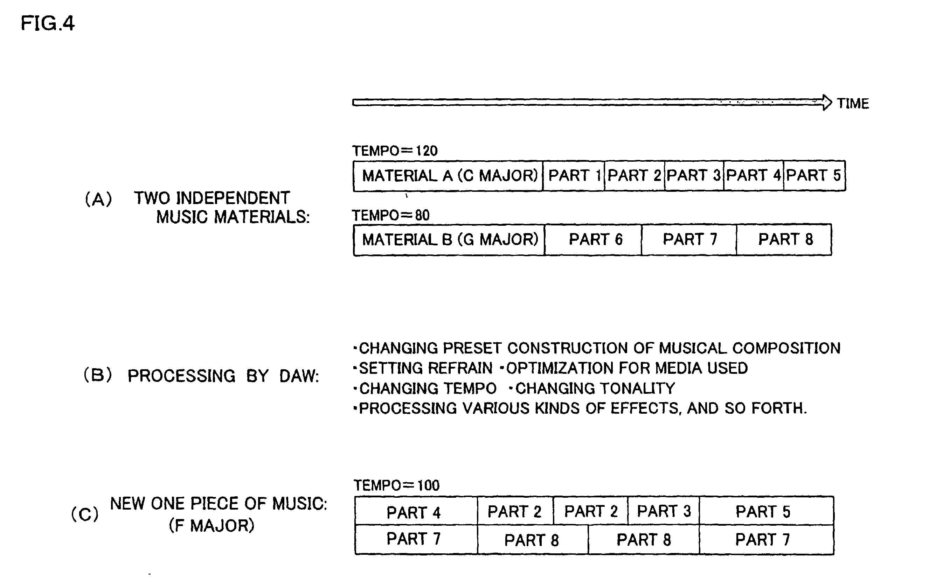

Further, in the DAW 200, various required steps for MA processing may be effected, which, for example, involve: changing tempo and/or tonality; setting refrain and/or ritardando; setting and changing the composition of musical instruments and/or the construction of musical composition; processing various kinds of effects; and optimization for each of media used. One example of such processing is shown in Fig. 4. Suppose, for instance, that two independent pieces of music materials are provided as shown in (A) of the Fig. 4. That is, one music material A is composed in C major with the tempo of 120, consisting of Parts 1 to 5 in sequence. And, another music material B is composed in G major with the tempo of 80, consisting of Parts 6 to 8 in sequence. If those two materials are subjected to processing by the DAW 200 for changing and setting the afore-said construction of musical composition, tempo, tonality and so forth, as shown in the (B) of the Fig. 4, it is possible to create a new piece of musical composition in F major with the tempo of 100, as shown in (C) of the Fig. 4. With regard to the automatic processing program 204, description will be made thereof later.

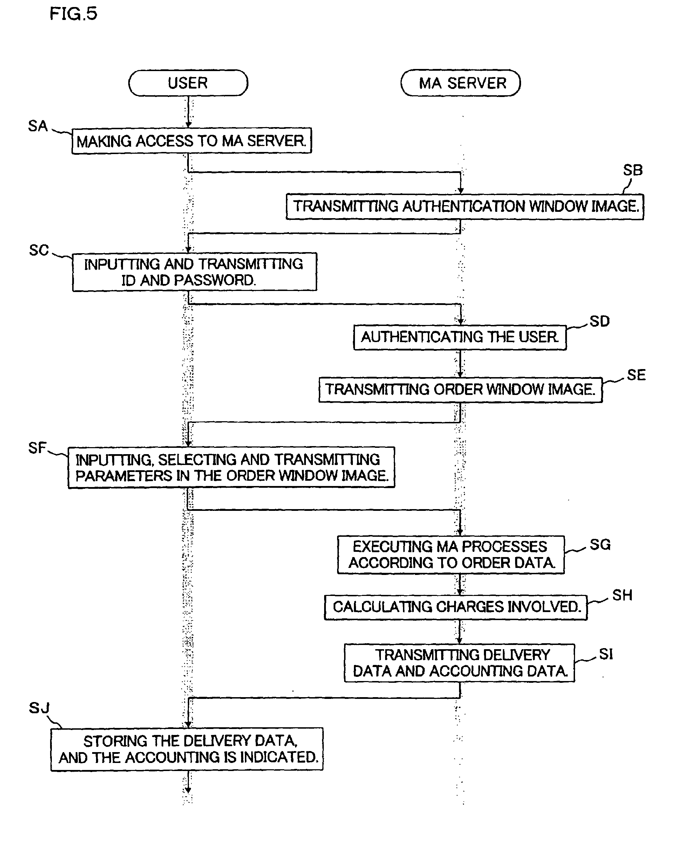

Turning back to Fig. 1, a user can operate the PC 150 to gain access to the MA server 100 through the Internet 190. Of course, this is in no way limitative, but, other sorts of equipments, such as hand-held terminals, may be used for that access purpose.
<Operation of the Present Embodiment>···Next, referring to Figs. 5 to 7 as well, an operation of the present embodiment will be explained. Fig. 5 illustrates principal steps of the operation. At first, a user operates his or her PC 150 to make access to the MA server 100 (at step SA). Responsive thereto, the MA server 100 executes the authentication program 108 by which a window image for authentication is then transmitted to the PC through the Internet 190 (at step SB). In the PC 150, a user's ID and password are inputted on the basis of the authentication window image appearing on the screen, and then, those inputted data for authentication are transmitted through the Internet 190 to the MA server 100 (at step SC). The MA server 100 then references the user database 102 and checks thereagainst the data for authentication which the server has received, thereby identifying the user (at step SD).

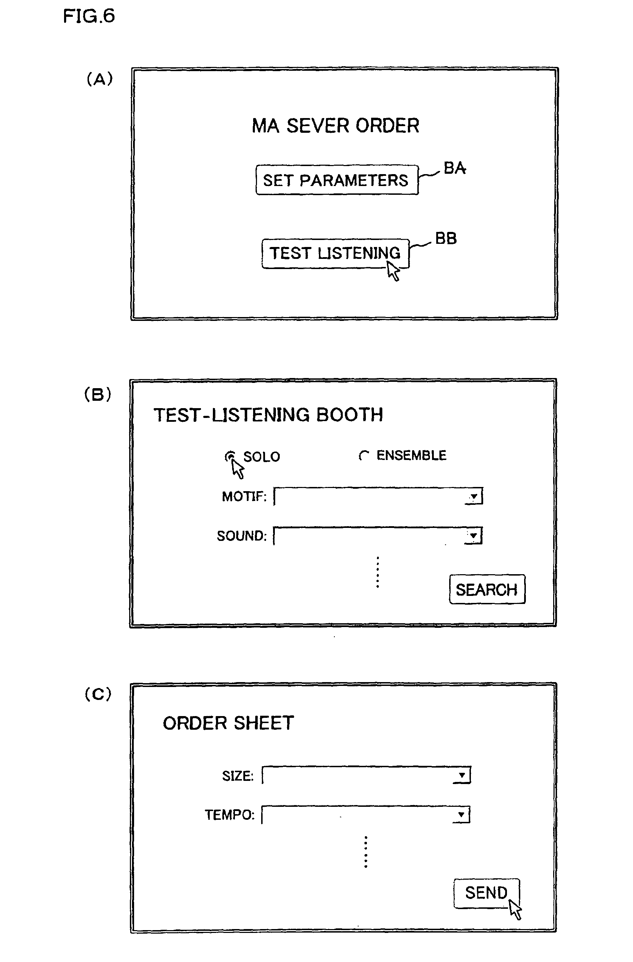

Next, in the MA server 100, the ordering program 110 is executed, thereby transmitting a window image for ordering to the user's PC (at step SE). Then, in the user's PC 150, for example, there appears such order window image as in (A) of Fig. 6 upon the screen. The user, who wishes to set the parameters, may click on the button BA in the window image by using a mouse cursor or the like, and, if the user desires test-listening, he or she may click on the button BB. Upon the button BB having been clicked on, a window image for searching as shown in (B) of the Fig. 6, for instance, appears on the screen, in which the user may input parameters for searching and thereby can test listen to a desired music. Namely, in the illustrated embodiment, the user should first designate one of "solo" and "ensemble", and further designate a desired "motif", a desired "sound", etc.···as guided in sequence. Thereafter, clicking on the search button causes a search to effect for relevant music materials, with the result that the music materials are reproduced.

On the other hand, if the button BA for setting parameters is clicked on, an order sheet image given as in the (C) of Fig. 6 shows up on the screen. In that case, the user will have to input a desired value in each of the parameters indicated, or open a pull-down menu to select a desired parameter(s) therein. For example, the user may set "10 minutes" for the size of music, set "80" for the tempo, set "piano" for the sound, and continues to set other parameters···. At this point, it is noted that, the user may designate a music material(s) to which he or she has test listened, whereupon a parameter(s) required for that music material(s) will be automatically set. That is, for example, if the user designates the music material as a guitar solo concert, a parameter for sound will automatically be set as "guitar". After having set those parameters, when the user clicks on the send button, an order data is transmitted to the MA server 100 (at step SF).

On the side of the MA server 100, a processing for creating MA is executed on the basis of the order data 114 (at step SG). Specifically, an operator of the DAW makes reference to the order data 114 and uses the DAW 200 to execute music production operations according to the order. At this stage, the material data 202 that have been provided in the DAW 200 is used.

A data of finally produced musical composition is transmitted as a delivery data 116 from the DAW 200 to the MA server 100. Responsive thereto, in the MA server 100, the delivery program 112 is executed, so that calculation of charges involved is effected by referencing the delivery data 116 (at step SH). Then, the delivery data 116 is transmitted together with an accounting data to the user's PC 150 (at step SI). The user's PC 150 stores in memory the delivery data 116 received therefrom and simultaneously indicates the details of accounting on the screen according to the accounting data (at step SJ).

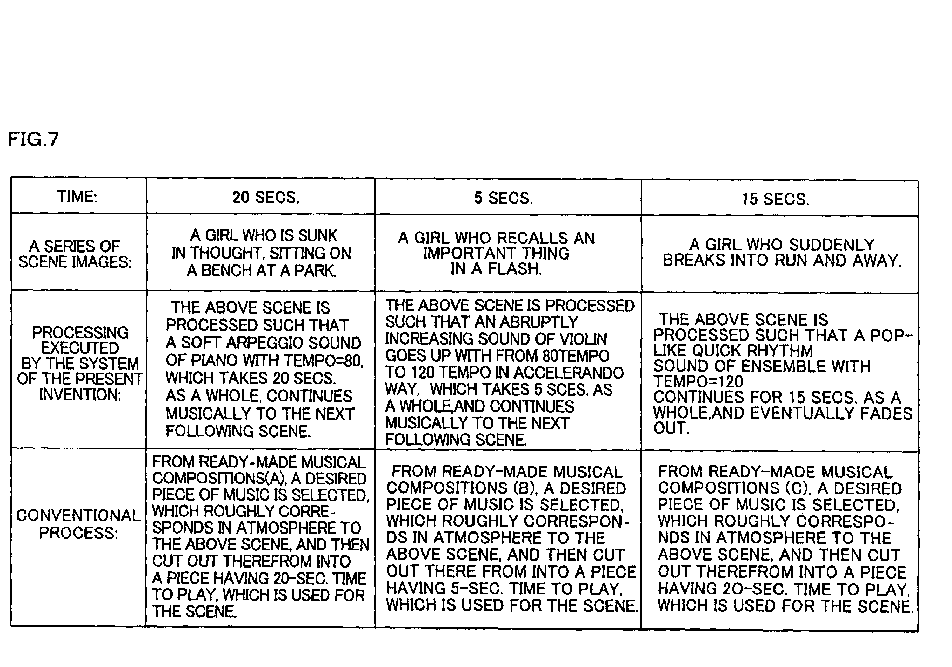

A specific example showing the ordering and delivery processes under the above-described system is illustrated in Fig. 7. This example refers to the case where a background music is applied to each image by the system of the present invention.

Namely, suppose that images each requiring a background music are as follows:
Scene 1 ··· "a girl who is sunk in thought, sitting on a bench at a park", for 20 sees.
Scene 2 ··· "a girl who recalls an important thing in a flash", for 5 secs.
Scene 3 ··· "a girl who suddenly breaks into run and away", for 15 secs.
Then, the user may order the following musical parts for the respective foregoing scenes.
Scene 1 ··· a soft arpeggio sound of piano (Tempo = 80 is designated.)
Scene 2 ··· an abrupt and increasingly aggressive sound of violin.
Scene 3 ··· a sound of ensemble in a pop-like quick rhythm (Tempo = 120 is designated.)

In response to such order, an operator of the DAW selects proper music materials from the material data 202. The DAW operator further executes an editing process for putting together such materials musically so as to complete a new piece of background music. In contrast thereto, as shown in Fig. 7, the conventional process merely consists of selecting some pieces of ready-made musical compositions which roughly correspond in atmosphere to the respective scenes, cutting out them into some pieces of proper sizes, and putting the pieces together.
<Effects of the Embodiment>···As described above, according to the present embodiment, the following effects are attained:
(1) Since the processing employs the multi-track process effected by the DAW operator, it is possible to obtain a high-quality music with a uniform and integral sound as a whole, at relatively low costs. In other words, any musical composition may be provided in a manner close to ordering, or in what can be described as a semi-ordering way, as compared with a full order placed with a composer for music composition.
(2) It is easy to re-edit a music that was once edited, according to a request from a user who has test listened thereto, by utilizing each of the material data.
(3) Music material(s) composed by a renowned composer may be used as one of the material data 202 to provide a music honored by the name of that composer, so that an exceptionally high value-added music can be made available at a reasonable charge. For instance, in the case where music material(s) composed by a composer, "Ichiro Yamada", is used, it will be possible to indicate his credit on a resulting opus, like "Produced by Ichiro Yamada".
(4) When ordering, a user can easily place an order by using a nontechnical term which simply expresses location, color, or the like····(see Fig. 2), instead of using any musical terminology, which allows any ordinary people to use an ordinary word expressing an image that he or she has in mind, and therefore allows a wide ranges of users to use this system. In particular, the recent increasing development of broad band in the Internet has led to the fact that even an ordinary individual person introduces a movie or an animation that he or she has created, upon the net. Thus, demand for adding music to those kinds of image pieces has been increased. But, as stated above, in most cases, it is economically difficult to ask any composer for music composition. In accordance with the present embodiment, however, such ordinary individual person can use the system to add a good quality of music to his or her own movie work.

For example, in the previously described case of Fig. 7, a user may simply set the respective parameters as follows:
Scene 1···for 20 seconds, "park", "bench", "sunk in thought", and "girl".
Scene 2···for 5 seconds, "in a flash", "important", "recall", and "girl".
Scene 3···for 15 seconds, "suddenly", "break into run", "away", and "girl".

Moreover, it is possible to only transmit the images from the user's PC 150 directly to the MA server 100, so that the operator of DAW can directly review the images and therefore can add more appropriate pieces of music thereto.
<Another Embodiment>···A large number of another embodiments may be realized in the present invention. Among them, for instance, there may be included the following embodiments:
(1) Instead of the previously described embodiment wherein the operator of DAW executes such steps of processing as selecting music materials and editing them, an automatic processing program 204 may be provided in the DAW 200, depending on a nature of the processing, so as to subject those processing steps to automatic processing. For example, under such automatic processing program, the following steps can be automatically processed: a step of processing the intro and outro of music material which has been designated; a step of changing the tempo and tonality of the music material; a step of setting a refrain therein; and so forth. Further, such automatically proceessable parameters may be indicated on the screen of user's PC 150, so that a user can change the parameters as desired for test listening.
(2) Instead of the previously described embodiment wherein the delivery data 116 has to be downloaded to the user's PC 150 over the Internet 190, the delivery may of course be effected by use of various kinds of recording mediums, such as CD-R, DVD-R and recording tape.
(3) While having described musical compositions in the foregoing embodiment, the scopes of music to which the present invention pertains includes overall ranges of sounds, such as the so-called SE (sound effect), narration, and the like.
(4) The architecture of system may also be modified so as to execute the same operations as suggested above. For example, instead of the previously described embodiment wherein the MA server 100 and the DAW 200 are arranged independently of each other, a whole of the systems may be arranged in one integral computer system.
(5) The foregoing embodiments have been described in the case of the DAW being used therein, but, of course, any other suitable means may be used as well. In addition, depending on a nature of order, it may be arranged such that one part of a music piece to be created is produced by using the DAW, while another part of the music piece is composed by a composer.

### [Applicability for Industrial Use]

As described thus far, the present invention has the effect of allowing for efficient provision of high-quality pieces of music full of originality in a short period of time.

## Claims

1. A process for providing music, which uses a great number of material data that provided beforehand from side of a sever in a multi-track form, said process being **characterized by** including:
a step of receiving an order from a user through a network;
a step of subjecting said material data to required processing by means of DAW according to details of said order; and
a step of providing said user with a music which has been produced by and subsequent to said required processing.

2. A system for producing music, by which the music is produced according to details of an order received from a user through a network and then provided to said user, said system being **characterized by** being provided with:
a great number of material data provided beforehand in a multi-track form;
an ordering means for allowing parameters to be set and then allowing an order to be placed; and
a delivery means for delivering to said user a resulting music which has been produced,
and
also **characterized in that** said resulting music is produced by using said material data according to said details of said order placed by said ordering means.

3. The system for producing music as set forth in claim 2, which is **characterized by** being provided with:
a test-listening means for allowing said material data to be test listened.

4. The system for producing music as set forth in claim 2 or claim 3, which is
**characterized by** being provided with:
an authentication means for executing authentication processing to said user; and
an accounting means for executing accounting processing with respect to services given to said user.

5. The system for producing music as set forth in any one of claims 2 to 4, which is **characterized in that**:
the music, which is to be produced by using said material data according to said details of said order placed by said ordering means, is produced by use of DAW.

6. The system for producing music as set forth in claim 5, which is **characterized in that** said DAW is provided with:
an automatic processing means for automatically producing the music which is to be produced by using said material data according to said details of said order placed by said ordering means.

7. The system for producing music as set forth in any one of claims 2 to 6, which is **characterized in that** said ordering means allows nontechnical term associated with the music to be used in order to set said details of said order.

8. A system for providing music, which is **characterized in that** said system for producing music as set forth in any one of claims 2 to 7 and a lager number of user's terminals are connected to a network.
